# EUROPÄISCHE PATENTSCHRIFT

(11) **EP 2 130 422 B1**
(45) Veröffentlichungstag und Bekanntmachung des Hinweises auf die Patenterteilung: **26.10.2011**
(21) Anmeldenummer: 09154865.1
(22) Anmeldetag: 11.03.2009
(51) Int. Cl.: A01D 41/127

(54) **Selbstfahrendes Fahrzeug zur Bearbeitung landwirtschaftlicher Flächen und Verfahren zum Betreiben eines selbstfahrenden Fahrzeugs zur Bearbeitung landwirtschaftlicher Flächen**
Self-driving vehicle for processing agricultural areas and method for operating same
Véhicule automobile destiné au traitement de surfaces agricoles et procédé de fonctionnement d'un véhicule automobile destiné au traitement de surfaces agricoles

(30) Priorität: 06.06.2008 DE 102008027245
(43) Veröffentlichungstag der Anmeldung: 09.12.2009
(73) Patentinhaber: CLAAS Selbstfahrende Erntemaschinen GmbH, 33428 Harsewinkel (DE)
(72) Erfinder: Haverkamp, Michael, 48346, Ostbevern (DE); Hugenroth, Ludger, 48346, Ostbevern (DE)

(56) Entgegenhaltungen:
- EP-A- 1 321 024
- US-A- 4 462 079

## Beschreibung

Die Erfindung betrifft ein selbstfahrendes Fahrzeug zur Bearbeitung landwirtschaftlicher Flächen gemäß Anspruch 1 sowie ein Verfahren zum verbrauchsbewussten Betreiben eines landwirtschaftlichen Fahrzeugs gemäß Anspruch 9.

Mähdrescher, Traktoren und Häcksler werden zur Bearbeitung landwirtschaftlicher Flächen in vielfältiger Art und Ausführung zu unterschiedlichsten Aufgaben, die sich aus saisonbedingter Feldbearbeitung ergeben, eingesetzt. Mit zunehmender Bearbeitungsflächengröße in der Landwirtschaft hat dabei eine hinsichtlich der Verbrauchskosten optimierte Benutzung derartiger Maschinen in den letzten Jahren immer mehr an Bedeutung gewonnen. Entsprechend sind bereits Verfahren zum Verbrauchs-optimierten Einsatz derartiger in der Landwirtschaft üblicher Fahrzeuge vorgeschlagen worden.

So ist aus dem US-Patent US 7,206,689 B1 ein Verfahren zur Optimierung eines Kraftstoffverbrauchs in einer beispielhaft als Traktor ausgeführten Arbeitsmaschine mit einem Verbrennungsmotor vorgeschlagen worden. Bei dem Verfahren wird eine Kraftstoff-Wirtschaftlichkeitsübersicht benutzt, welche die Kraftstoffwirtschaftlichkeit bei bestimmten Betriebsbedingungen der Arbeitsmaschine darstellt. Bei dem Verfahren wird nun eine notwendige Leistungsreserve festgelegt, und die bei den unterschiedlichen Betriebsbedingungen vorhandene Reserve bestimmt. Für die Betriebspunkte, deren vorhandene Reserve oberhalb der notwendigen Reserve ist, wird die Kraftstoffwirtschaftlichkeit bestimmt und danach ein Ausgabewert festgelegt, der eine Aussage über eine wirtschaftliche Leistungserbringung oder Kraftübertragung macht. Bei diesem Verfahren findet eine für den Benutzer der Maschine nicht unmittelbar nachvollziehbare Annäherung an einen wirtschaftlichen Betriebspunkt statt.

Daneben ist auch aus der europäischen Patentschrift EP 1 321 024 B1 ein Verfahren zur Optimierung des Betriebs eines landwirtschaftlichen Fahrzeuges, etwa eines Mähdreschers oder Feldhäckslers, bekannt geworden. Bei dem Verfahren werden mit Einrichtungen wie Sensoren Betriebswerte oder Arbeitsergebnisse erfasst und in Speichern abgelegt oder in Anzeigeeinrichtungen angezeigt. Bei dem Verfahren wird unter Berücksichtigung eines oder mehrerer momentan ermittelter Parameter und in Speichereinrichtungen hinterlegter Parameter ein ökonomischer Betriebswert oder ökonomischer Arbeitspunkt bestimmt. Dieser wird dem Fahrer des Fahrzeugs angezeigt, kann aber auch einer weiteren Einrichtung, die der Steuerung des Fahrzeugs dient, zugeführt werden.

Der ökonomische Betriebswert wird bei dem Verfahren so gewählt, dass ein optimaler Zustand zwischen der Erlös bringenden Fahrzeugleistung und der den Erlös mindernden Kosten beim momentanen Arbeitseinsatz, wie beispielsweise einem Erntebetrieb, erreicht wird. Dieses multifunktionale Verfahren erlaubt es, eine Vielzahl von die Fahrzeugbetriebsdaten betreffenden Parameter als auch die Eigenschaften des Ernteguts oder der Ernteumgebung hinsichtlich eines wirtschaftlichen Betriebs zu berücksichtigen. Es ist mit dem Verfahren möglich, das Fahrzeug bei dem Erntegutdurchsatz zu betreiben, bei dem der Erntekostenwert bei noch tolerierbarem Verlustkostenwert hinreichend gering ist. Der Erntegutdurchsatz hängt von der vorherrschenden Flächenleistung, dem Ertrag auf der zu bearbeitenden Fläche und den Fahrzeugeinstellungen ab. Zu seiner Bestimmung wird beispielsweise ein Ertragssensor, der den Kornertrag pro Erntestunde in einem Ernteeinsatz bestimmt, benutzt. Aus Größen wie der Fahrzeuggeschwindigkeit und der Schnittbreite eines beispielsweise in einem Mähdrescherbetrieb eingesetzten Schneidwerkes berechnet sich die Flächenleistung pro Zeit. Eine bei derartigen in der Landwirtschaft eingesetzten Fahrzeugen vorhandene Anzeige des aktuellen Kraftstoffverbrauchs kann benutzt werden, um die Flächenleistung in Beziehung zu dem Kraftstoffverbrauch zu setzen.

Somit ist es bei diesem Verfahren möglich, den Erntegutdurchsatz in Zusammenhang mit der Flächenleistung und/oder den Kraftstoffverbrauch anzuzeigen. Bei diesem hinsichtlich seiner Analysemöglichkeiten und Änderungseingriffen sehr vielfältigen Verfahren erschwert die Komplexität eine schnelle Reaktion des Bedienpersonals. Es ist auch mitunter für das Bedienpersonal nicht unmittelbar absehbar, über welche Änderung welcher Größe in weichem Ausmaß welcher Erfolg erreichbar ist. Gerade aber im Freilandbereich muss das Bedienpersonal aufgrund schnell eintretender Wetteränderungen eine unmittelbare Abschätzung über Gesamtbearbeitungsdauer oder Gesamtkraftstoffverbrauch übersehen können und danach die Bearbeitung entweder abbrechen oder unter den herrschenden Bedingungen beenden. Außerdem ist gerade bei den immer weiter gestiegenen und noch weiter steigenden enormen Kraftstoffkosten eine direkte Darstellung einer Kraftstoffsverbrauchsgröße sehr wichtig und beinahe das bestimmende Element zur Einstellung eines optimalen Betriebspunkts.

Weiter ist aus dem Stand der Technik die US 4,462,079 bekannt geworden, in der die Visualisierung des spezifischen Kraftstoffverbrauchs Fu offenbart ist, wobei sich Fu aus dem Quotienten von Kraftstoffverbrauch F und bearbeiteter Fläche (WxD; W=Arbeitsbreite, D=zurückgelegte Strecke) ergibt. Aufgabe ist es hier neben der Ermittlung des spezifischen Kraftstoffverbrauchs abzuschätzen, wann ein zu bearbeitendes Territorium bearbeitet sein wird und welcher Kraftstoffverbrauch zu erwarten ist. Aufgrund dessen, dass der Kraftstoffverbrauch in Abhängigkeit von einem Zeitbedarf ermittelt wird, kann eine derartige Ausführung vom Fachmann nicht dafür herangezogen werden zu bestimmen, ob ein energieeffizienter Betriebspunkt der landwirtschaftlichen Arbeitsmaschine erreicht wurde oder erreicht werden wird.

Demzufolge ist es Aufgabe der vorliegenden Erfindung, ein landwirtschaftlich einsetzbares Bearbeitungsfahrzeug, wie einen Mähdrescher, einen Feldhäcksler oder einen Traktor, so betreiben zu können, dass zu jeder Zeit die Auswirkung einer Änderung einer wesentlichen Fahrzeugeinstellung nahezu unmittelbar absehbar ist.

Diese Aufgabe wird gelöst durch ein selbstfahrendes Fahrzeug mit den Merkmalen des Anspruchs 1 und durch ein Verfahren zum Betreiben eines selbstfahrenden Fahrzeugs mit den Merkmalen des Anspruchs 8. Bevorzugte Weiterbildungen sind Gegenstand der Unteransprüche. Weitere Merkmale und Vorteile der Erfindung ergeben sich aus dem Ausführungsbeispiel.

Die Erfindung bringt den Vorteil mit sich, einen hinsichtlich der Verbrauchsdaten optimierten Einsatz des Fahrzeuges sicherzustellen, gleichzeitig aber auch auf einfache Weise Aussagen über eine Gesamtbearbeitungszeit oder einen bei der Flächenbearbeitung entstehenden Gesamtkraftstoffverbrauch treffen zu können.

Ein ganz erheblicher Vorteil der Erfindung ist, dass der für den spezifischen Kraftstoffverbrauch optimale Betriebspunkt somit visualisiert werden kann. Der Fahrer kann daher entscheiden, ob er kraftstoffsparend pro Fläche oder mit maximaler Flächenleistung erntet. Weiterhin ist es möglich, dies Kriterium als Vorfahrtregler zu verwenden. Die Erfindung erlaubt somit eine optimale Betriebsweise unter voller Kontrolle und Einflussnahme des Fahrers bzw. Bedieners.

Bevorzugt ist die wenigstens eine Betriebsgröße die Fahrzeuggeschwindigkeit. Denkbar sind aber auch weitere zeitabhängige Betriebsgrößen wie die Motordrehzahl oder über GPS-Sensoren ermittelbare Ortsveränderungen des Fahrzeugs pro Zeiteinheit.

In einer Ausführung des erfindungsgemäßen Fahrzeugs ist die Anzeigeeinrichtung zur Anzeige des jeweils momentan vorliegenden Wertepaares aus spezifischem Kraftstoffverbrauch sowie bearbeiteter und/oder bearbeitbarer Fläche pro Zeiteinheit ausgebildet. Ist die Anzeigeeinrichtung zur Angabe einer Motorleistungsgrenze des Fahrzeugs ausgebildet, so kann mit Vorteil eine Schädigung der Antriebseinheit des Fahrzeugs durch Überbelastung vermieden werden.

Die Recheneinheit ist zur Bestimmung einer Ausgleichskurve an die aufgenommenen Wertepaare aus spezifischem Kraftstoffverbrauch und bearbeiteter Fläche pro Zeiteinheit und die Anzeigeeinrichtung zur Anzeige der Ausgleichskurve ausgebildet. Hier liegt der Vorteil darin, Ungleichmäßigkeiten sowohl in der Betriebsweise als auch eine boden- oder fruchtbedingte Abweichung von den Durchschnittswerten der zu bearbeitenden Fläche darzustellen und ihren Einfluss auf die nachfolgende Betriebsweise zu minimieren.

Sowohl die erfindungsgemäße Recheneinheit als auch die erfindungsgemäße Anzeigeeinrichtung kann als separate Einheit in einer Fahrzeugkabine oder an dem Fahrzeug angebracht sein und mit der vorhandenen Bordelektronik einschließlich vorhandener BUS-Systeme und Sensoren verbunden und betrieben werden. Die Recheneinheit und/oder die Anzeigeeinrichtung kann aber auch in die gesamte Steuerungs- und Regelungselektronik oder bereits vorhandene Auswerteelektronik des Fahrzeugs integriert sein.

Besonders bevorzugt ist die Recheneinheit und/oder die Anzeigeeinrichtung eines erfindungsgemäßen Fahrzeugs oder eines solchen nach dem erfindungsgemäßen Verfahren betriebenen ausgebildet, die erhaltenen Größen oder Daten an die Fahrzeug-Steuerungsvorrichtung zu übergeben. Hier können die bekannten Vorteile einer als sogenannter Vorfahrtregler ausgeführten Fahrzeug-Steuerungsvorrichtung mit den Vorteilen der Erfindung wie einer einfachen und sofortigen Übersicht kombiniert werden. Dies kommt insbesondere dann zum Tragen, wenn die Fahrzeug-Steuerungsvorrichtung zur Steuerung des Betriebs des Fahrzeugs in Abhängigkeit von den ihr übergebenen Größen oder Daten sowie daraus ermittelten oder abgeleiteten Ausgleichs- oder Kennlinien-artigen Zusammenhänge ausgebildet ist.

Erfindungsgemäß ist das Fahrzeug natürlich auch wahlweise sowohl über eine Handsteuerung durch den Benutzer als auch über die Fahrzeug-Steuerungseinrichtung betreibbar. Diese Wahlmöglichkeit beruht auf dem besonderen Vorteil der Erfindung, dass trotz rechnergesteuerter, verbrauchs- und kostenoptimierter Betriebsweise zu jedem Zeitpunkt ein Wechsel zu der Benutzersteuerung basierend auf den aktuellen Daten möglich ist. Auch danach wird dem Benutzer aber äußerst vorteilhaft eine Anzeige über spezifischen Kraftstoffverbrauch und Flächenleistung gemacht und so die Auswirkungen der von ihm gemachten Eingriffe unmittelbar, umfassend und einfach dargelegt.

Die Erfindung wird nachfolgend in Zusammenhang mit den begleitenden Zeichnungen anhand eines Ausführungsbeispiels näher beschrieben.

In den Figuren zeigen:
- Figur 1: ein landwirtschaftliches Fahrzeug in Form eines Feldhäckslers in einer teilweise geschnittenen Seitenansicht; und
- Figur 2: eine schematische Darstellung der erfindungsgemäßen Betriebsweise des Feldhäckslers.

Die Erfindung wird nachfolgend anhand der Betriebsweise eines als Feldhäcksler ausgeführten Fahrzeugs dargestellt. Dabei wird der dem Fachmann hinlänglich bekannte Feldhäcksler nur so weit beschrieben, als es zum Verständnis der beanspruchten Betriebsweise notwendig ist. Zudem kann die am Beispiel eines Feldhäckslers beschriebene Erfindung in jeder landwirtschaftlichen Arbeitsmaschine eingesetzt werden, deren Produktivität über die sogenannte Flächenleistung ermittelbar ist. Insbesondere sei hier auf Mähdrescher sowie schleppergezogene Bodenbearbeitungsmaschinen und Sä-, Dünge- und Pflanzenschutzsysteme verwiesen.

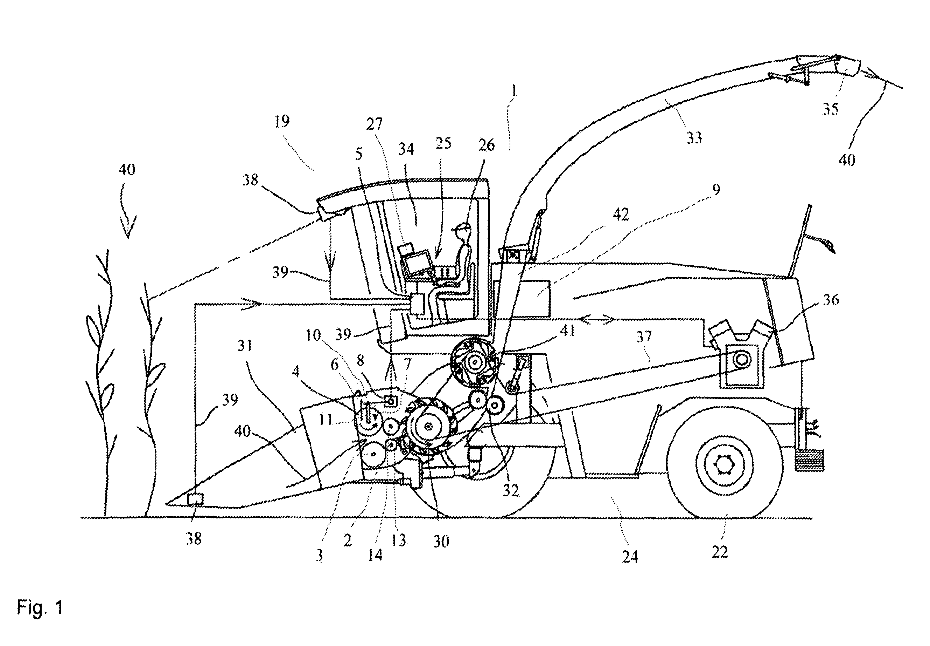

Der in Figur 1 dargestellte Feldhäcksler 1 weist ein Gehäuse 19 und ein Fahrgestell 24 auf, an dem die Räder 22 angeordnet sind. Ein Motor 36 dient als Antrieb, der über einen Riemen 37 mit den Arbeitsorganen des Feldhäckslers 1 in Verbindung steht.

Das zu erntende Erntegut 40 wird über ein Vorsatzgerät 31 geschnitten und aufgenommen. An das Vorsatzgerät 31 ist die Einzugsvorrichtung 10 angeschlossen, welche hier im Ausführungsbeispiel über zwei untere Einzugs- bzw. Vorpresswalzen 3, 13 und zwei obere Einzugs- bzw. Vorpresswalzen 4, 14 verfügt, die an einem Rahmen oder Gehäuse 2 angeordnet sind.

Die Einzugs- und Vorpresswalzen 3, 13 und 4, 14 werden durch Belastungsmittel 6 aufeinander vorbelastet, um jederzeit einen ausreichenden Anpressdruck 7 auf die sich durch die Einzugswalzen hindurch bewegende Gutmatte auszuüben, sodass nicht einzelne Streifen aus dem Erntegut 40 von der sich im Anschluss an die Einzugsvorrichtung 10 befindenden Häckseltrommel 30 herausgezogen und nahezu unzerkleinert weiter transportiert werden.

Um eine definierte Schnittlänge zu gewährleisten, werden bei dem Feldhäcksler 1 auf dem Weg des Ernteguts 40 durch die Maschine laufend die Vortriebsgeschwindigkeiten erhöht. Das bedeutet, dass die Vorpress- und Einzugswalzen 3, 13; 4, 14 mit einer geringeren Umfangsgeschwindigkeit angetrieben werden als die Häckseltrommel 30, die wiederum mit einer geringeren Umfangsgeschwindigkeit als die Nachzerkleinerungseinrichtung 32 betrieben wird. Der Nachbeschleuniger 41 transportiert das zu befördernde Erntegut 40 durch den Förderschacht 42 und durch den Auswurfkrümmer 33 und an der Auswurfkrümmerklappe 35 vorbei hinaus auf einen benachbart zu dem Feldhäcksler 1 angeordneten und hier nicht dargestellten Transportwagen, der das geerntete und bearbeitete Erntegut 40 abtransportiert.

Der Feldhäcksler 1 verfügt über eine Fahrzeugkabine 34, die Platz für einen Benutzer 26 und gegebenenfalls einen Mitfahrer bietet. Eine Anzeigeeinrichtung 25 ist vorgesehen, um den Benutzer 26 über die aktuellen Bedingungen zu informieren. So sind für ihn Situationen absehbar, wo er ggf. die Betriebseinstellungen ändern muss.

Eine Bedieneinrichtung 5 dient zur Steuerung des Feldhäckslers 1 und/oder der Einzugsvorrichtung 10. Die Bedieneinrichtung 5 kann mit einem oder mehreren Sensoren 38 über Leitungen 39 verbunden sein, um den Feldhäcksler 1 insgesamt und die Einzugsvorrichtung 10 entsprechend zu steuern.

Die Einzugsvorrichtung 10 und insbesondere der Anpressdruck 7 des Beiastungsmittels 6, welches hier über ein hydraulisches System 8 verfügt, wird von der Bedieneinrichtung 5 gesteuert, wobei wenigstens ein Fahrparameter berücksichtigt wird. Das bedeutet hier, dass der Hydraulikzylinder 11 des hydraulischen Systems 8 einen erhöhten Anpressdruck 7 von den oberen Einzugswalzen 4. 14 auf die unteren Einzugswalzen 3, 13 aufbringt, wenn die Fahrgeschwindigkeit von einer ersten Geschwindigkeit 50 beispielsweise auf eine zweite Geschwindigkeit ansteigt.

Erfindungsgemäß wird beim Betrieb des Feldhäckslers 1 eine verbrauchte Kraftstoffmenge in Einheiten Liter pro Stunde von einer am Antriebsmotor 36 des Feldhäckslers 1 angebrachten Steuerelektronik über ein Bussystem einer Recheneinheit 27 zugeführt und von dieser an eine in der Fahrzeugkabine 34 an der Bedieneinrichtung 5 angebrachte Anzeigeeinrichtung 25 übergeben. Die Angabe von pro Zeiteinheit verbrauchter Kraftstoffmenge ist bei den mit Hilfe von Dieselmotoren betriebenen Landmaschinen üblich.

Erfindungsgemäß wird weiterhin von der Bordelektronik des Feldhäckslers 1 über nicht-gezeigte Sensoren die wirksame Breite der Flächenbearbeitungsvorrichtung bzw. des Vorsatzgeräts 31 an die Recheneinheit 27 übermittelt. Zwar bleibt die Breite der Häckseltrommel 30 konstant, aber die wirksame Breite des Vorsatzgeräts 31 ist veränderbar, sodass sich diese auf die Flächenleistung auswirkt. Aus der übermittelten wirksamen Breite der Flächenbearbeitungsvorrichtung und einer ebenfalls von der Steuerelektronik des Feldhäckslers 1 an die Recheneinheit 27 übergebenen Fahrzeuggeschwindigkeit v wird die momentane Größe der Flächenleistung, d. h. der pro Zeiteinheit bearbeitbaren bzw. bearbeiteten Fläche, errechnet. Die Recheneinheit 27 kann nun aus der Flächenleistung (angegeben in z.B. ha/h) und dem Kraftstoffverbrauch (angegeben in z.B. l/h) einen spezifischen Kraftstoffverbrauch, d. h. den pro Flächeneinheit aufzuwendenden bzw. aufgewandten Kraftstoffverbrauch in z.B. (l/ha) errechnen. Dabei werden vorzugsweise jeweils mehrere Messwerte hintereinander ermittelt und zur Vermeidung von Mess- und/oder Auswertungsfehlern über eine vorbestimmte Anzahl von aufgenommenen Messwerten eine Mittelung durchgeführt.

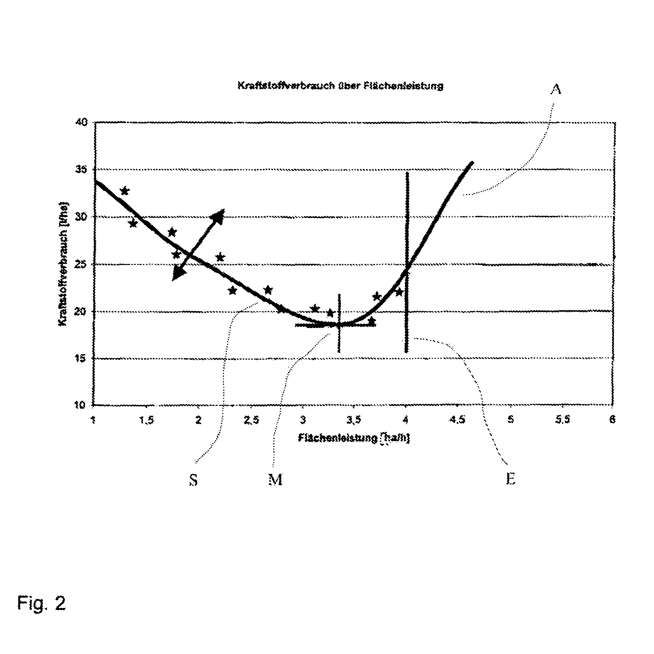

Die durch diese Mittelung erhaltenen Messwertpaare werden von der Recheneinheit 27 in ein graphisches, an die Anzeigeeinrichtung 25 übermitteltes Schaubild gebracht. Das graphische Schaubild ist von der Art, wie es vereinfacht in Fig. 2 durch die als Sterne ausgedrückten Einzelmesswerte oder mittelungsgewichtete Messwerte und die als asymmetrisch aufgebogene Parabel gezeigte Ausgleichskurve A dargestellt ist.

Erfindungsgemäß ist ein durch Messwerte darstellbare Messbereich nach oben durch die Motorleistungsgrenze E bei maximaler Flächenleistung begrenzt. Die Untergrenze ist durch einen Einsatzpunkt bei geringer Flächenleistung unter dennoch hohem Kraftstoffverbrauch infolge von widrigen Bodenbedingungen oder noch nicht gereiftem über überreifem Getreide gegeben.

Bevorzugt wird erfindungsgemäß versucht, hinsichtlich der Flächenleistung den Wert von einer minimalen bis zu einer maximal möglichen Flächenleistung auf einem ausreichend großen Anfangsbereich unter den herrschenden Umweltbedingungen und/oder Bodenbedingungen sowie Temperatureinflüssen als eine Art Kalibrierung aufzunehmen. Ist dies nicht möglich, kann als anzuzeigender bzw. zur Ergänzung eines nur in einem Teil des Bereiches aufnehmbaren Wertepaarbereich auf eine zuvor während einer vorherigen Flächenbearbeitung aufgenommenen und in der Recheneinheit 27 gespeicherten Wertebereich zurückgegriffen werden. Dabei versteht sich, dass erfindungsgemäß mehrere Wertebereiche je nach Feuchtigkeitsbedingungen, abzuerntendem Gut, Bodenbedingungen, gemessen nach Lehmboden und/oder Löß- sowie Sandboden kategorisiert abgespeichert werden und entsprechend einer optimalen Passung mit den aktuellen Bedingungen bei der Bearbeitung berücksichtigt werden.

Erfindungsgemäß sieht nun der Bediener des Feldhäckslers 1, ob er die Maschine nahe des durch das Minimum M der Ausgleichskurve festgelegten Wirtschaftlichkeitspunkt betreibt oder nicht. Dies ist möglich, indem er den ihm erfindungsgemäß auch als analoge oder digitale Tachometergröße angezeigten spezifischen Kraftstoffverbrauch, gemessen in Liter pro Hektar, als Eingangswert in die Kurve eingibt, um die momentan erzielte Flächenleistung in Hektar pro Stunde zu ermitteln. Besonders bevorzugt wird der in den beiden Größen spezifischer Kraftstoffverbrauch und Flächenleistung ausgedrückte momentane Betriebszustand des Feldhäckslers 1 als Symbol S auf der Anzeigevorrichtung 25 angegeben. Der Bediener, die Recheneinheit 27 oder die Fahrzeug-Steuerungsvorrichtung 9 des Feldhäckslers 1 kann nun aus dem Momentanwert bzw. der angegebenen Ausgleichskurve A errechnen, ob der im Feldhäcksler 1 vorhandene Kraftstoff ausreicht, um die Fläche zu bearbeiten, oder ob beispielsweise die ihm zur Verfügung stehende Zeit etwa vor Eintritt der Dämmerung ausreicht, um bei der wirtschaftlichen Flächenleistung die zu bearbeitende Fläche vollständig abarbeiten zu können. Insbesondere sind erfindungsgemäß dann vorteilhafte Änderungen hinsichtlich der Bearbeitungszeit überschaubar, wenn etwa ein Wetterbericht ein Regengebiet angekündigt hat oder dieses durch entsprechende Bewölkung angekündigt wird.

Sofern die Bedienperson von einem aus übergeordneten Gründen bedingten Eingreifen absehen möchte bzw. kann, ist es im Rahmen der Erfindung vorgesehen, die auf der Anzeigeeinrichtung 25 dargestellten Wertepaare sowie die die Funktion einer Kennlinie darstellende Ausgleichskurve A an eine als sogenannter Vorfahrtregler bekannte Fahrzeug-Steuerungsvorrichtung 9 zur weiteren Energieoptimierten Betriebsart des Feldhäckslers 1 zu übergeben.

Die in Fig. 2 schematisch dargestellte Wertepaarsystematik und die Ausgleichskurve hängen von den jeweiligen Erntegutparametern ab und werden abhängig von diesen einen anderen Krümmungsradius aufweisen, d. h. im Vergleich zu der angedeuteten Kurve entweder gestaucht oder gestreckt verlaufen. Gleiches gilt auch für die ermittelten Messwerte.

### Bezugszeichenliste:

- 1: Feldhäcksler
- 2: Gehäuseeinrichtung
- 3: untere Einzugswalze
- 4: obere Einzugswalze
- 5: Bedieneinrichtung
- 6: Belastungsmittel
- 7: Anpressdruck
- 8: Hydraulisches System
- 9: Fahrzeug-Steuerungsvorrichtung
- 10: Einzugsvorrichtung
- 11: Hydraulikzylinder
- 12: Hydrospeicher
- 13: untere Einzugswalze
- 14: obere Einzugswalze
- 19: Gehäuse
- 21: GPS-Sensor
- 22: Rad
- 23: Gutmattendicke
- 24: Fahrgestell
- 25: Anzeigeeinrichtung
- 26: Benutzer
- 27: Recheneinheit
- 30: Häckseltrommel
- 31: Vorsatzgerät
- 32: Nachzerkleinerungseinrichtung
- 33: Auswurfkrümmer
- 34: Fahrzeugkabine
- 35: Auswurfkrümmerklappe
- 36: Antriebsmotor
- 37: Antriebsriemen
- 38: Sensor
- 39: Leitung
- 40: Erntegut
- 41: Nachbeschleuniger
- 42: Förderschacht

- v: Fahrzeuggeschwindigkeit
- A: Ausgleichskurve
- S: momentane Größen
- M: Minimum der Ausgleichskurve
- E: Motorleistungsgrenze

## Patentansprüche

1. Selbstfahrendes Fahrzeug (1) zur Bearbeitung landwirtschaftlicher Flächen, insbesondere Mähdrescher, Feldhäcksler oder Traktor, mit einer Antriebseinhelt (26), mit einer daran angebrachten oder anbringbaren Flächenbearbeitungsvorrichtung (30), mit einer Bedieneinrichtung (5) für einen Benutzer (26), mit einer Anzeigeeinrichtung (25) zur Anzeige wenigstens einer mit Hilfe wenigstens eines Sensors erfassen Betriebsgröße, mit einer Recheneinheit (27), die an die Anzeigeeinrichtung (25) angeschlossen ist, zur Auswertung der wenigstens einen Betriebsgröße und zur Übertragung der Auswertung an die Anzeigeeinrichtung (25) ausgebildet ist, und mit einer Fahrzeug-Steuerungsvorrichtung (9), wobei die Recheneinheit (27) zur Bestimmung einer pro Zeiteinheit bearbeiteten und/oder bearbeitbaren Fläche aus der wenigstens einen Betriebsgröße ausgebildet ist, **dadurch gekennzeichnet, dass** die Recheneinheit (27) weiter ausgebildet ist, aus der pro Zeiteinheit bearbeiteten Fläche und einem Kraftstoffverbrauch des Fahrzeugs einen spezifischen Kraftstoffverbrauch pro Flächeneinheit zu ermitteln, und die Anzeigeeinriohtung (25) derart beschaffen ist, dass sie den spezifischen Kraftstoffverbrauch und die pro Zeiteinheit bearbeitete und/oder bearbeitbare Fläche als funktionalen Zusammenhang (A) darstellt, wobei die Recheneinheit (27) zur Bestimmung einer Ausgleichskurve (A) an die aufgenommenen Wertepaare aus spezifischem Kraftstoffverbrauch und bearbeiteter Fläche pro Zeiteinheit und die Anzeigeeinrichtung (25) zur Anzeige der Ausgleichskurve (A) ausgebildet sind.

2. Fahrzeug nach Anspruch 1, **dadurch gekennzeichnet, dass** die wenigstens eine Betriebsgröße die Fahrzeuggeschwindigkeit (v) ist.

3. Fahrzeug nach Anspruch 1 oder 2, **dadurch gekennzeichnet, dass** die Anzelgeeinrichtung (25) zur Anzeige des jeweils momentan vorliegenden Wertepaares (S) aus spezifischem Kraftstoffverbrauch und bearbeiteter Fläche pro Zeiteinheit ausgebildet ist.

4. Fahrzeug nach einem der Ansprüche 1 bis 3, **dadurch gekennzeichnet, dass** die Anzeige zur Angabe einer Motorleistungsgrenze (E) des Fahrzeugs ausgebildet ist.

5. Fahrzeug nach einem der Ansprüche 1 bis 4, **dadurch gekennzeichnet, dass** die Recheneinheit (27) und/oder die Anzeigeeinrichtung (25) ausgebildet ist, die gemäß einem oder mehreren der vorangehenden Ansprüche erhaltenen Daten an die Fahrzeug-Steuerungsvorriohtung (9) zu übergeben.

6. Fahrzeug nach Anspruch 5, **dadurch gekennzeichnet, dass** die Fahrzeug-Steuerungsvorrichtung (9) zur Steuerung des Betriebs des Fahrzeugs in Abhängigkeit von den ihr übergebenen Größen ausgebildet ist.

7. Fahrzeug nach einem der vorangehenden Ansprüche, **dadurch gekennzeichnet, dass** es wahlweise über eine Handsteuerung durch den Benutzer (26) und die Fahrzeug-Steuerungseinrichtung (9) betreibbar ist.

8. Verfahren zum Betreiben eines selbstfahrenden Fahrzeugs (1) zur Bearbeitung landwirtschaftlicher Flächen, insbesondere eines Mähdreschers, Feldhäckslers oder Traktors, das mit einer Antriebseinheit (36), mit einer Flächenbearbeitungsvorrichtung (30), mit einer Bedieneinrichtung (5) für einen Benutzer (26), mit einer Anzeigeeinrichtung (25) zur Anzeige von über wenigstens einen Sensor erfassten wenigstens einen momentanen Betriebsgröße und mit einer Recheneinheit (27) ausgestattet ist, bei welchem Verfahren die erfasste Betriebsgröße der Recheneinheit (27) zur Verfügung gestellt wird und mit Hilfe der Recheneinheit (27) ausgewertet wird und eine so ermittelte Auswertung der Anzeigeeinrichtung (25) zur Verfügung gestellt wird, aus der wenigstens einen Betriebsgröße die pro Zelteinheit bearbeitete und/oder bearbeitbare Fläche ermittelt wird, **dadurch gekennzeichnet, dass** aus einem Kraftstoffverbrauch des Fahrzeugs (1) ein spezifischer Kraftstoffverbrauch zur Flächeneinheit bestimmt wird und dass der spezifische Kraftstoffverbrauch pro Flächeneinheit in Abhängigkeit von der pro Zeiteinheit bearbelteten und/oder bearbeltbaren Fläche (A) auf der Anzeigeeinrichtung (25) angezeigt wird, wobei die Recheneinheit (27) zur Bestimmung einer Ausgleichskurve (A) an die aufgenommenen Wertepaare aus spezifischem Kraftstoffverbrauch und bearbeiteter Fläche pro Zeiteinheit und die Anzeigeeinrichtung (25) zur Anzeige der Ausgleichskurve (A) ausgebildet sind.

9. Verfahren nach Anspruch 9, **dadurch gekennzeichnet, dass** ein funktionaler Zusammenhang von spezifischem Kraftstoffverbrauch pro Flächeneinheit und der bearbeiteten und/oder bearbeitbaren Fläche pro Zeiteinheit einer Fahrzeug-Steuerungsvorrichtung (9) zur verbrauchsorientierten Steuerung des Fahrzeugs übergeben wird.

## Claims

1. A self-propelled vehicle (1) for processing agricultural areas, in particular a combine harvester, a forage harvester or a tractor, comprising a drive unit (26), an area processing device (30) which is or can be mounted thereto, an operating device (5) for a user (26), a display device (25) for displaying at least one operating parameter detected by means of at least one sensor, a computing unit (27) connected to the display device (25) for evaluation of the at least one operating parameter and for transmitting the evaluation to the display device (25), and a vehicle control device (9), wherein the computing unit (27) is adapted to determine an area which is and/or can be processed per unit of time from the at least one operating parameter, **characterised in that** the computing unit (27) is further adapted to ascertain a specific fuel consumption per unit of area from the area processed per unit of time and a fuel consumption of the vehicle, and the display device (25) is such that it represents the specific fuel consumption and the area which is and/or can be processed per unit of time as a functional relationship (A), wherein the computing unit (27) is adapted to determine a best-fit curve (A) to the recorded pairs of values of specific fuel consumption and processed area per unit of time and the display device (25) is adapted to display the best-fit curve (A).

2. A vehicle according to claim 1 **characterised in that** the at least one operating parameter is the vehicle speed (v).

3. A vehicle according to claim 1 or claim 2 **characterised in that** the display device (25) is adapted to display the respectively instantaneously present pair of values (S) of specific fuel consumption and processed area per unit of time.

4. A vehicle according to one of claims 1 to 3 **characterised in that** the display is adapted to specify an engine power limit (E) of the vehicle.

5. A vehicle according to one of claims 1 to 4 **characterised in that** the computing unit (27) and/or the display device (25) is adapted to transmit the data acquired in accordance with one or more of the preceding claims to the vehicle control device (9).

6. A vehicle according to claim 5 **characterised in that** the vehicle control device (9) is adapted to control operation of the vehicle in dependence on the parameters transmitted thereto.

7. A vehicle according to one of the preceding claims **characterised in that** it is operable selectively by way of a hand control by the user (26) and the vehicle control device (9).

8. A method of operating a self-propelled vehicle (1) for processing agricultural areas, in particular a combine harvester, a forage harvester or a tractor, which is equipped with a drive unit (36), an area processing device (30), an operating device (5) for a user (26), a display device (25) for displaying at least one instantaneous operating parameter detected by at least one sensor, and a computing unit (27), in which method the detected operating parameter is made available to the computing unit (27) and evaluated by means of the computing unit (27) and an evaluation ascertained in that way is made available to the display device (25), from which at least one operating parameter the area which is and/or can be processed per unit of time is ascertained, **characterised in that** a specific fuel consumption in relation to the unit of area is determined from a fuel consumption of the vehicle (1) and the specific fuel consumption per unit of area in dependence on the area (A) which is and/or can be processed per unit of time is displayed on the display device (25), wherein the computing unit (27) is adapted to determine a best-fit curve (A) to the recorded pairs of values of specific fuel consumption and processed area per unit of time and the display device (25) is adapted to display the best-fit curve (A).

9. A method according to claim 8 **characterised in that** a functional relationship of specific fuel consumption per unit of area and the area which is and/or can be processed per unit of time is transmitted to a vehicle control device (9) for consumption-oriented control of the vehicle.

## Revendications

1. Véhicule automoteur (1) destiné au travail de surfaces agricoles, en particulier moissonneuse-batteuse, ensileuse ou tracteur, avec une unité d'entraînement (26), avec un dispositif de travail de surfaces (30) monté ou pouvant être monté sur celui-ci, avec un organe de manoeuvre (5) pour un utilisateur (26), avec un dispositif d'affichage (25) pour afficher au moins un paramètre de fonctionnement détecté à l'aide d'au moins un capteur, avec une unité de calcul (27) qui est connectée au dispositif d'affichage (25) et qui est conçue pour évaluer ledit au moins un paramètre de fonctionnement et transmettre l'évaluation au dispositif d'affichage (25), et avec un dispositif de commande de véhicule (9), l'unité de calcul (27) étant conçue pour déterminer une surface travaillée et/ou travaillable par unité de temps à partir dudit au moins un paramètre de fonctionnement, **caractérisé en ce que** l'unité de calcul (27) est également conçue pour déterminer une consommation spécifique de carburant du véhicule par unité de surface à partir de la surface travaillée par unité de temps et d'une consommation de carburant du véhicule, et le dispositif d'affichage (25) est conçu pour représenter la consommation spécifique de carburant et la surface travaillée et/ou travaillable par unité de temps sous la forme d'une relation fonctionnelle (A), l'unité de calcul (27) étant conçue pour déterminer une courbe de régression (A) sur les paires de valeurs enregistrées de consommation spécifique de carburant et de surface travaillée par unité de temps et le dispositif d'affichage (25) pour afficher la courbe de régression (A).

2. Véhicule selon la revendication 1, **caractérisé en ce que** ledit au moins un paramètre de fonctionnement est la vitesse du véhicule (v).

3. Véhicule selon la revendication 1 ou 2, **caractérisé en ce que** le dispositif d'affichage (25) est conçu pour afficher la paire de valeurs (S) momentanément présente de consommation spécifique de carburant et de surface travaillée par unité de temps.

4. Véhicule selon une des revendications 1 à 3, **caractérisé en ce que** l'afficheur est conçu pour indiquer une limite de puissance de moteur (E) du véhicule.

5. Véhicule selon une des revendications 1 à 4, **caractérisé en ce que** l'unité de calcul (27) et/ou le dispositif d'affichage (25) est conçu(e) pour transmettre les données obtenues selon une ou plusieurs des revendications précédentes au dispositif de commande de véhicule (9).

6. Véhicule selon la revendication 5, **caractérisé en ce que** le dispositif de commande de véhicule (9) est conçu pour commander le fonctionnement du véhicule en fonction des paramètres qui lui sont transmis.

7. Véhicule selon une des revendications précédentes, **caractérisé en ce qu'**il peut être commandé au choix par l'utilisateur (26) au moyen d'une commande manuelle ou par le dispositif de commande de véhicule (9).

8. Procédé de fonctionnement d'un véhicule automoteur (1) destiné au travail de surfaces agricoles, en particulier d'une moissonneuse-batteuse, d'une ensileuse ou d'un tracteur, qui est équipé d'une unité d'entraînement (36), d'un dispositif de travail de surfaces (30), d'un organe de manoeuvre (5) pour un utilisateur (26), d'un dispositif d'affichage (25) pour afficher au moins un paramètre de fonctionnement momentané détecté par au moins un capteur et d'une unité de calcul (27), dans lequel procédé le paramètre de fonctionnement détecté est mis à la disposition de l'unité de calcul (27) évalué à l'aide de l'unité de calcul (27) et une évaluation ainsi déterminée est mise à la disposition du dispositif d'affichage (25), la surface travaillée et/ou travaillable par unité de temps est déterminée à partir dudit au moins un paramètre de fonctionnement, **caractérisé en ce qu'**une consommation spécifique de carburant du véhicule par unité de surface est déterminée à partir d'une consommation de carburant du véhicule (1) et que la consommation spécifique de carburant par unité de surface est affichée sur le dispositif d'affichage (25) en fonction de la surface travaillée et/ou travaillable par unité de temps (A), l'unité de calcul (27) étant conçue pour déterminer une courbe de régression (A) sur les paires de valeurs enregistrées de consommation spécifique de carburant et de surface travaillée par unité de temps et le dispositif d'affichage (25) pour afficher la courbe de régression (A).

9. Procédé selon la revendication 9, **caractérisé en ce qu'**une relation fonctionnelle entre la consommation spécifique de carburant par unité de surface et la surface travaillée et/ou travaillable par unité de temps est transmise à un dispositif de commande de véhicule (9) pour commander le véhicule en fonction de la consommation.
